# EUROPEAN PATENT SPECIFICATION

(11) **EP 0 820 239 B1**
(45) Date of publication and mention of the grant of the patent: **06.03.2002**
(21) Application number: 96910084.1
(22) Date of filing: 15.04.1996
(51) Int. Cl.: A23P 1/08, A23L 1/03

(54) **MICROWAVE BATTER COMPRISING AMYLASE**
DURCH MIKROWELLEN KOCHBARE NASSPANADE ENTHALTEND AMYLASE
PATE A AMYLASE POUR CUISSON AU FOUR MICRO-ONDES

(30) Priority: 13.04.1995 GB 9507715
(43) Date of publication of application: 28.01.1998
(73) Proprietor: NOVUS FOODS LTD., Whitefield, Manchester M45 7QF (GB)
(72) Inventor: PICKFORD, Keith, Manchester M45 7QF (GB)
(74) Representative: Browne, Robin Forsythe, Dr.
(86) International application number: GB9600909
(87) International publication number: WO9632026

(56) References cited:
- WO-A-88/06007
- WO-A-93/03634
- WO-A-95/30344
- GB-A- 1 278 736
- K.KULP AND R.LOEWE: "Batters and Breadings in Food Processing" 1990 , AMERICAN ASSOCIATION OF CEREAL CHEMISTS , USA XP002006658 Pages 93-115 see page 995, paragraph 2 see page 102 see page 106 - page 108, paragraph 1 see page 113 - page 115, paragraph 1

## Description

This invention relates to a coating for foodstuffs which is cookable or reheatable by means of a microwave oven. The invention relates particularly but not exclusively to microwave cookable batters or breaded coatings.

Microwave ovens are commonly used for heating food products which have been pre-prepared by a foodstuff manufacturer. Pre-prepared products include batter coated foodstuffs in which the basic foodstuff for example meat, fish, poultry, vegetables, fruit or iced products, has been coated in batter optionally coated with crumbs and then deep fried and then frozen for supply to a consumer.

Heating in a microwave oven may complete the cooking process or simply reheat a previously cooked product. Microwave cookable coatings have particular requirements. Steam released from the food can cause the batter to become soggy, detracting from the texture and taste of the product.

WO88/06007 disclosed a batter composition and method of preparation wherein the foodstuff is predusted with high amylose starch and methyl cellulose. The batter includes high enzyme soya flour. WO93/03634 disclosed an improved predust composition including a mixture of particulate starch and particulate cellulose gum which gels on heating in the presence of moisture. Such a predust can form a dense high viscosity barrier to absorption of oil and migration of moisture. The barrier also provides a stable environment for any seasoning and can enhance bonding with the batter. Although high enzyme soya flours afford generally acceptable products, variations in their enzyme content have given rise to inconsistent and occasionally undesirable flavours.

Amounts referred to in this specification are by dry weight unless indicated otherwise.

According to a first aspect of the present invention a microwave cookable or reheatable foodstuff coating comprises an aqueous mixture including the following ingredients:
a. starch
b. flour
c. a gelling agent
d. an enzyme additive, and
e. further ingredients;
wherein the enzyme additive comprises one or more alpha-amylases optionally together with one or more further enzymes, buffers and stabilisers, and wherein the composition excludes lipoxygenases.

Use of a coating composition in accordance with the first aspect of this invention confers several advantages. Use of cellulose gum, reducing sugars or other expensive ingredients is not essential. The absence of reducing sugars allows the formation of a low calorie food product. The use of an enzyme additive allows use of a wide range of ingredients to form a coating composition which has a long shelf life when frozen and which can be cooked or reheated in a microwave oven to yield a palatable product. Use of soya flour may be minimised or avoided.

Preferred compositions do not contain cellulose gum. Alternatively or in addition compositions of this invention preferably exclude use of reducing sugars such as D-xylose.

The enzyme additive may be a concentrated enzyme preparation for example in the form supplied by a manufacturer, and not a conventional enzyme-containing ingredient used in batter or food coating formulations such as starch or flour. However the concentrated enzyme preparation may be blended with a further ingredient such as starch or flour prior to formulation of the coating composition. Enzyme preparation supplied by manufacturers may contain buffers and/or stabilising compounds such as polyols and polyelectrolytes.

The additive preferably contains only the enzymes required for the coating composition. The presence of other enzymes such as lipoxygenases which may be present in commercial high enzyme flours can be avoided by the present invention. These enzymes are undesirable as they may give rise to adverse flavours.

The further ingredients may include dried egg, emulsifiers and ancillary ingredients.

The flour employed may comprise soya flour although this is not essential. A mixture of soya flour and other flour, for example wheat, rye, oat, buckwheat, maize, rice or potato flour may be employed. Hard wheat flour, for example buckwheat flour or pea protein fibre can be employed. The flour used is preferably low gluten flour so as to afford low elasticity, avoiding formation of a chewing coating. However flour having a higher gluten content may be employed in conjunction with an enzyme additive which incorporates a protease adapted to hydrolyse the gluten content. The flour may be present in a preferred amount of 20 to 30% by weight of the dry composition.

Percentages and other amounts used in this specification are by weight unless indicated otherwise.

Use of high amylose starch, for example native pea starch or wrinkled pea starch is preferred, for example NASTAR (trade mark of Cosucra BV) is especially preferred. Starch obtained from the wrinkled pea variety TRIPOS is especially preferred. High amylose maize starch may also be used. The amylose content is preferably 50 to 70%, more preferably 60% or more. The starch may be present in a preferred amount of 40 to 50%.

The dried egg preferably comprises dried whole egg although blends of yolk and albumen may be employed. An amount of 5 to 25%, preferably 5 to 15%, more preferably 10 to 15% may be employed.

The gelling agent can be employed in an amount sufficient to stabilise the coating as an emulsion. One or more of the following may be employed: collagen, alginate, xanthan gum, gelatin, guar gum, agar gum, gum arabic, locust bean gum or carrageenan gum. Use of guar gum or mixtures thereof is preferred. Methyl cellulose can be employed but this may not be preferred on account of expense.

Carrageenan gum has been found to be purely suitable in conjunction with wheat or maize starch. This leads to a noticeable increase in gel strength. Gum arabic is not very viscous at low concentrations and can be used as an excellent stabiliser and emulsifier. Gum arabic can be used in mixtures with xanthan gum and guar gum. Locust bean gum is particularly suitable in imparting desirable elastic properties to carrageenan and agar gels. Guar gum is preferred for compositions in accordance with this invention because it is stable and gives almost constant viscosity over a wide pH range. Dried guar gum hydrates rapidly in cold water to give highly viscous solutions and high shear mixing has been found to dramatically increase viscosity of guar gum containing compositions.

The gelling agent is preferably present in an amount sufficient to give long-term stability, for example to allow for an interruption in production, for example for 12 hours. An amount of up to 5%, preferably 0.25 to 3% may be employed although gum arabic may be used in amounts up to 40%.

Preferred emulsifiers comprise lecithin or stearate, for example glyceryl monostearate for example EMULDAN (trade mark of Grinstead). The amount effective to form and emulsin may be employed, for example 1 to 3%.

The alpha-amylases may include maltogenic amylases including those expressed by Bacillus subtilis. A preferred enzyme additive is available under the trade mark NOVAMYL MG manufactured by Novo Nordisk. Beta-amylases may also be employed. Preferred enzyme additives act on the starch fraction of flour, modifying the starch to create low molecular weight sugars, for example amylose and dextrins which improve the water retention capacity of the batter. However NOVAMYL amylases reduce any tendency to retrogradation or undesirable further hydrolysis during cooking or reheating.

Additional enzymes may include proteases for example endopeptidases such as NEUTRASE manufactured by Novo Nordisk. ALKALASE manufactured by Novo Nordisk, Pentosanase, for example PENTOPAN 200 mg (Novo Nordisk) or beta glucanase can also be employed. An alpha-amylase may be employed in any effective amount, for example 0.6 to 0.8%. A protease where present may be in an amount of for example 0.2 to 0.8% which is sufficiently low to avoid formation of bitter peptides. Higher amounts may be employed to facilitate protein breakdown dependent on the composition of the ingredients used.

Preferred compositions in accordance with this invention incorporate at least one phosphate. Various phosphates may be employed, including monosodium or disodium phosphates. In preferred embodiments of the invention the phosphate is selected to give a solution having the correct pH for optimum enzyme activity. Use of tetrasodium pyrophosphate is especially preferred. The phosphate may be present in an amount of 1 to 4%.

A stabiliser, preferably ammonium bicarbonate may be employed. Ammonium bicarbonate is preferred as it also serves to reduce undesirable odours and flavours.

According to a second aspect of the present invention a process for forming a microwave cookable or reheatable coated foodstuff comprises the steps of:
providing a blended mixture of ingredients in accordance with any preceding claim with water;
incubating the mixture at an elevated temperature and pH range 6 to 10;
mixing under high shear to form an emulsion; and
applying the emulsion to a food substrate to form a coated product.

The steps of incubation and mixing under high shear are preferably carried out simultaneously.

Incubation may be carried out in a blender, the temperature being maintained at a temperature below 60°C preferably 25 to 40°C. The blended mixture may then be left to stand to complete the enzymic hydrolysis. The resultant mixture may be diluted with water as desired to form a fine emulsion suitable for application to a food substrate. The application of the batter to the food product is preferably carried out below 20°C more preferably around 15°C.

After application a crumb may be applied to the coating and the coated products fried, preferably in soya, rape seed or other suitable oil at 195°C for 55 to 60 seconds. Alternative frying conditions may be employed. The product may then be cooled and cryogenically frozen to a minimum core temperature of -30°C to eliminate micro-organisms. The frozen products may then be packed under nitrogen or other inert atmosphere. Nitrogen may be preferred as this has been found to preserve the integrity of the coating on storage in comparison to other gases used for packaging of food products.

The invention is further described by means of example but not in any limitative sense.

### Enzyme Additive

The following enzyme additive was employed in Examples 1 to 6 and 12 to 16.

| | % ingredients |
|---|---|
| Gluocono-d-lactone | 18 |
| Sodium acid pyrophosphate (pH 4.2) | 10 |
| Monosodium phosphate (pH 4.5) | 50 |
| Ammonium bicarbonate | 19 |
| Alpha amylase | 3 |
| | 100 |

### Example 1

A coating composition was prepared by mixing the following ingredients:

| | % ingredients |
|---|---|
| High amylose maize starch | 45 |
| Soya flour | 30 |
| Dried whole egg | 10 |
| Xanthan gum | 2 |
| Guar gum | 1 |
| Lecithin | 3 |
| Alpha amylase | 0.8 |
| Protease | 0.6 |
| Tetra sodium pyrophosphate | 7.6 |
| | 100 |

### Example 2

A coating composition was prepared by mixing the following ingredients:

| | % ingredients |
|---|---|
| High amylose green wrinkled pea starch | 28 |
| High amylose maize starch | 15 |
| Soya flour | 10 |
| Green wrinkled pea protein | 15 |
| Soya Flour | 15 |
| Dried whole egg | 10 |
| Lecithin | 3 |
| Alpha amylase | 0.8 |
| Protease | 0.6 |
| Tetrasodium pyrophosphate | 2.6 |
| | 100 |

### Example 3

A coating composition was prepared by mixing the following ingredients:

| | % ingredients |
|---|---|
| High amylose green wrinkled pea starch | 45 |
| Green wrinkled pea protein | 25 |
| Hard wheat flour | 5 |
| Dried whole egg | 10 |
| Xanthan gum | 2 |
| Guar gum | 1 |
| Carrageenan | 1 |
| Lecithin | 3 |
| Alfa amylase | 0.8 |
| Protease | 0.6 |
| Tetrasodium pyrophosphate | 3.6 |
| Thermflo modified starch | 3 |
| | 100 |

### Example 4

A coating composition was prepared by mixing the following ingredients:

| | % ingredients |
|---|---|
| High amylose maize starch | 7 |
| Soya flour | 32 |
| Dried whole egg | 12 |
| Glyceryl monostearate | 1 |
| Alfa amylase | 1 |
| Xanthan gum | 2 |
| Guar gum | 1 |
| Thermflo modified starch | 1 |
| Tetra sodium pyrophosphate | 2 |
| | 100 |

### Example 5

A coating composition comprising the following ingredients was prepared:

| | % ingredients |
|---|---|
| High amylose starch (Microcrisp, National Starch) | 48 |
| Guar gum (3500, Red Carnation) | 0.5 - 2 |
| Glyceryl monostearate (Emuldan, Grinstead) | 1 |
| Dried whole egg (Henningsens W1) | 13 |
| D-Xylose | 2 |
| Enzyme additive | 3 |
| Soya flour (Hisoy, ADM) | balance to 100% |
| | 100 |

### Dilution 3:1 water:batter

The composition was mixed using a Silverson high shear mixer for 25 min. The following readings were taken using a number 3 spindle at 12 rpm.

| 0.5% Guar Gum | | | |
|---|---|---|---|
| **TIME** | **INITIAL** | **1 HOUR** | **2 HOURS** |
| Viscosity/cp | 210 | 220 | 240 |
| Temperature/°C | 41.2 | 30 | 22.5 |

| 1% Guar Gum | | | |
|---|---|---|---|
| **TIME** | **INITIAL** | **1 HOUR** | **2 HOURS** |
| Viscosity/cp | 550 | 600 | 1540 |
| Temperature/°C | 40.5 | 31.5 | 26.9 |

| 2% Guar Gum | | | |
|---|---|---|---|
| **TIME** | **INITIAL** | **1 HOUR** | **2 HOURS** |
| Viscosity/cp | 4260 | 4380 | 4950 |
| Temperature/°C | 40.2 | 30.5 | 24.5 |

These results show that 1% is the optimum amount of guar gum and that guar gum is not degraded by the enzyme additive.

Guar gum 3500 manufactured by Red Carnation (E412) was used.

### Typical Analysis of Guar Gum

Physical characteristics - off white to light tan powder with slight odour. Viscosity (1% solution, Brookfield RVT, spindle 3, 20rpm, 25°C)

| | |
|---|---|
| after 4 hours | 3000-3800 cp |
| after 24 hours | 3200-4000 cp |

pH 1% solution 5.5-7.5
Particle size 99% through 75 microns
Galactomannan content 80% minimum

The viscosity observed at 20 rpm is apparently consistent with that of the batter mix at 12 rpm.

Shelf life stability tests over a 30 day period showed no deterioration of this composition.

### Example 6

| | % ingredients |
|---|---|
| High amylose starch (Microcrisp, National Starch) | 48 |
| Gum blend, 60% 40% Guar/Xanthan (Red Carnation) | 0.3 - 2 |
| Glyceryl monostearate (Emuldan, Grinstead) | 1 |
| Dried whole egg (Henningsens W1) | 13 |
| D-Xylose | 2 |
| Enzyme additive | 3 |
| Soya flour (Hisoy, ADM) | balance to 100% |
| | 100 |

The mixture (250 g) was added to water (750 g) at 15°C and mixed using a Silverson high shear mixer for 23 min until a temperature of 41.6°C was reached. The viscosity readings were as follows using a number 3 spindle at 12 rpm.

| 2% Gum Blend | | | |
|---|---|---|---|
| **TIME** | **INITIAL** | **1 HOUR** | **2 HOURS** |
| Viscosity/cp | 9850 | 9380 | 10,000+ |
| Temperature/°C | 40 | 26.6 | 23.5 |

### Colour : yellow 3, pH 6.5

2% guar gum was found to be unsuitable for commercial production. However a proportional reduction in the level of gum to 0.6% gave a workable viscosity band between 600 cp and 1100 cp.

### Example 7

| | % ingredients |
|---|---|
| High amylose starch (Microcrisp, National Starch) | 45 |
| Soya flour (Hisoy, ADM) | balance to 100% |
| Dried whole egg (Henningsens W1) | 10 |
| Xanthan gum | 0.3 - 1 |
| Guar gum | 0.2 - 1 |
| Lecithin | 1 - 3 |
| Alpha amylase | 0.8 |
| Protease | 0.6 |
| Tetrasodium pyrophosphate | 0.6 |
| | 100 |

### Dilution 3:1 water:batter

The ingredients were mixed under high shear for 30 min to an active temperature of 40°C.

### Example 8

| | % ingredients |
|---|---|
| High amylose starch (Microcrisp, National Starch) | 45 |
| Soya flour (Hisoy, ADM) | balance to 100% |
| Dried whole egg (Henningsens W1) | 10 |
| Xanthan gum | 0.2 - 1 |
| Methyl cellulose (A4M premium (fat barrier)) | 0.2 - 1 |
| Lecithin | 1 - 2 |
| Tetrasodium pyrophosphate | 0.6 |
| Sodium bicarbonate | 1 |
| Alpha amylase | 0.8 |
| Protease | 0.6 |
| Tetrasodium pyrophosphate | 0.6 |
| | 100 |

### Dilution 3:1 water:batter

The ingredients were mixed under high shear for 30 min to an active temperature of 40°C.

Examples 7 and 8 show that an optimum viscosity can be achieved by adjustment of the amount of gum. The coating was stable in the commercially comparable viscosity band of 600 to 1000 cp and in some cases up to 1500 cp. Pick-up was exceptionally good. A mixture of 3:1 water gave a coating which was stable during frying. Short shelf lift tests up to 30 days showed that the coating was stable on stabilised products.

### Example 9

| | % ingredients |
|---|---|
| High amylose pea starch | 30 |
| High amylose maize starch (Monocrisp, National Starch) | 15 |
| Soya flour (Hisoy, ADM) | 35 |
| Pea protein | 15 |
| Dried whole egg (Henningsens W1) | 10 |
| Glyceryl monostearate (Emuldan, Grinstead) | 2.75 |
| Alpha amylase | 0.8 |
| Tetra sodium pyrophosphate | 0.6 |
| Ammonium bicarbonate | 0.6 |
| Guar gum | 0.25 |
| | 100 |

### Dilution 3:1 water:batter

The ingredients were mixed under high shear for 30 min to an active temperature of 40°C.

### Example 10

| | % ingredients |
|---|---|
| High amylose pea starch | 45 |
| Pea protein | 25 |
| Low gluten wheat flour | 5 |
| Dried whole egg (Henningsens, W1) | 15 |
| Xanthan gum | 0.2 - 1 |
| Methyl cellulose (A4M (Dow)) | 0.1 - 1 |
| Lecithin | 2 |
| Soya flour (Hisoy, ADM) | balance to 100% |
| Alpha amylase | 0.8 |
| Protease | 0.6 |
| Thermflo modified starch | 3 |
| Ammonium bicarbonate | 0.6 |
| | 100 |

### Example 11

| | % ingredients |
|---|---|
| High amylose pea starch (min 65%) | 45 |
| High amylose maize starch (Microcrisp, National Starch) | 7 |
| Soya flour | 32 |
| Dried whole egg (Henningsens, W1) | 12 |
| Glyceryl monostearate | 2 |
| Thermflo starch | Balance to 100% |
| Alpha amylase | 0.5 |
| Xanthan gum | 0.2 - 1 |
| | 100 |

The compositions of Examples 10 and 11 were mixed in the standard way by adding 250 g of the composition to water and blending using a Silverson high shear mixer until the temperature reached 40°C.

Example 9, when mixed with water in the ratio of 3:1 produced a viscosity in excess of 11000 cp. Water retention of the pea starch was found to be extremely high. However this mixture was capable of further dilution. When mixed at 4:1 water:batter the viscosity was about 900 cp. This mixture was found to be ideal for low pick-up applications. Example 10 gave an acceptable viscosity at the lower percentages of gum. The methyl cellulose served to act as a fat barrier. Example 9 gave the correct viscosity with a low addition of xanthan gum. Thus Examples 9 to 11 are suitable for microwavable coatings. A greater stability was achieved in the 3:1 water:batter mixtures and short term shelf life trials have indicated stability.

### Example 12

| | % ingredients |
|---|---|
| High amylose starch (Microcrisp, National Starch | 48 |
| Guar gum | 0.5 |
| Glyceryl monostearate (Emulden, Grinstead) | 1.5 |
| Dried whole egg (Henningsens, W1) | 14 |
| D-xylose | 2 |
| Enzyme additive | 3 |
| Soya flour (Hisoy, ADM) | 31 |
| | 100 |

### Test

The mixture (250 g) was added to water (750 g) at 12°C and mixed using a Silverson high shear mixture for 27 min until a temperature of greater than 40°C was reached. The viscosity readings were as follows using a number 3 spindle at 12 rpm.

| **TIME** | **INITIAL** | **1 HOUR** | **2 HOURS** |
|---|---|---|---|
| Viscosity/cp | 160 | 210 | 220 |
| Temperature/°C | 40 | 31.5 | 27 |

This viscosity was too low to give optimum pick-up under production conditions.

### Example 13

Example 12 was repeated using 0.75% guar gum. At a mixing temperature of 40°C with a number 3 spindle at 12 rpm the viscosity of the mixture was 220 cp. This viscosity was too low for optimum use in production.

### Example 14

Examples 12 and 13 were repeated using 1% guar gum. At a mixing temperature of 40°C the viscosity using a number 3 spindle at 12 rpm was 400 cp but began to increase with time.

### Example 15

Examples 12 to 14 were repeated using 1.75% guar gum. The viscosity at mixing was 650 cp but this began to increase rapidly with time. The viscosity was too high for optimum production.

### Example 16

| | % ingredients |
|---|---|
| High amylose starch (Microcrisp, National starch) | 48 |
| Guar gum (Red Carnation) | 1 |
| Methocel A4M (Dow (fat barrier)) | 0.25 |
| Glyceryl monostearate (Emuldan, Grinstead) | 2 |
| Whole egg (Henningsens, W1) | 14 |
| D-xylose | 2 |
| Enzyme additive | 3.75 |
| Soya flour (Hisoy, ADM) | 29 |
| | 100 |

The mixture (250 g) was added to water 750 g) at 11°C and mixed for 25 min using a Silverson high shear mixer until the temperature was greater than 40°C. The viscosity readings using a number 3 spindle at 12 rpm were as follows.

| **TIME** | **INITIAL** | **1 HOUR** | **2 HOURS** |
|---|---|---|---|
| Viscosity/cp | 570 | 610 | 1580 |
| Temperature/°C | 40 | 30 | 26.9 |

### Example 17

Food products were produced using the formulations described in Example 1 of WO95/30344 and Example 16 above.

| Comparative Example (Example 1 of WO95/30344) | |
|---|---|
| **Ingredients** | **% by weight** |
| High amylose starch | 48 |
| Cellulose gum | 2 |
| Glyceryl monostearate | 1 |
| Dried whole egg | 13 |
| D-xylose | 2 |
| Enzyme additive | 3 |
| Soya Flour | 31 |
| | 100 |

| **The Enzyme Additive Comprised** | |
|---|---|
| Glucono-D-lactone | 18 |
| Sodium Acid pyrophosphate (pH 4.2) | 10 |
| Mono sodium phosphate (pH 4.5) | 50 |
| Ammonium bicarbonate | 19 |
| α-Amylase (Novamyl) | 3 |
| | 100 |

The following conditions were employed.

The temperature of the substrate to which the coating was applied was not below -5°C and the substrate did not have any ice on the surface. The presence of ice or too low a temperature may lead to incorrect levels of pick-up of the predust and batter and can result in coating "blow off" in the fryer. The surface of the substrate should not be wet when entering the predust applicator because this would lead to increased levels of predust pick-up. The belt speed through the batter applicator was monitored to ensure that the predust wetted out and that bald spots did not occur. Fines in the crumb in the Japanese crumb applicator did not exceed 10%. The oil was fresh and the temperature was maintained at 195°C. The frying period was 55 seconds to give a fully cooked coating.

The fried product was cryogenically freezed using liquid nitrogen to ensure that the cause of the particles reached -30°C. The particles were not frozen in their packaging. Further freezing in the cold store can occur if the particles are packed with a temperature above -18°C and this can lead to moisture migration with consequent damage to the coating.

The products were packed into thermoconductive polypropylene trays, flushed with nitrogen gas and covered with a film. The oxygen content of the packaging did not exceed 0.005%. The products were stored at -18 to -20°C and steps were taken to ensure that the temperature did not fluctuate during storage.

In order to determine the properties of the coatings a standard substrate particle was employed. This had a weight of 23 g and dimensions of 9 cm x 22.5 cm x 8 mm. The particle was made from textured vegetable protein blended with 8% vegetable fat. The average moisture content of the particles was 58%.

A predust having the following composition was used.

| | |
|---|---|
| Thermflo | 35% |
| Methocel A4M | 25% |
| Xanthan | 25% |
| Egg albumin | 15% |
| | 100% |

The particles were coated in predust, the coating composition, RHM Japanese style crumb 1060 and then flash fried. The temperature of the oil was 195°C and the frying time was 55 seconds.

The average pick-up weights were:
Predust 1.75%
Batter (wet) 35.5%
Crumb 9%

The total average coating pick-up when cooked, ie loss of water, increase in fat was 37%. A Stable Micro Systems texture analyser was used and average results were obtained from 100 tests of the standard substrate coated with the predust, batter and RHM 1060 crumb, fried at 195°C for 55 seconds. The texture analysis was undertaken when the particles were fresh from the fryer and the results are shown in the accompanying figures.

Figure 1 shows the profile obtained from the comparative example. This formulation is commercially acceptable and demonstrates a reasonable shelf life. A coating is considered to be unstable if it will deteriorate within 14 days even if packed in sealed containers and stored at -18°C.

Figure 2 shows the comparative example after storage at -20°C in a domestic freezer for 30 days. Standard particles were packed in a polypropylene tray in an impervious pouch and flushed with nitrogen. Four particles at a time were heated in a 850 W oven for 2.5 min. The cores of the particles reached a minimum of 70°C and the particles were left to stand for 3 min before testing.

Figure 3 shows the comparative example after storage for 60 days.

Figure 4 shows the profile after storage for 14 months.

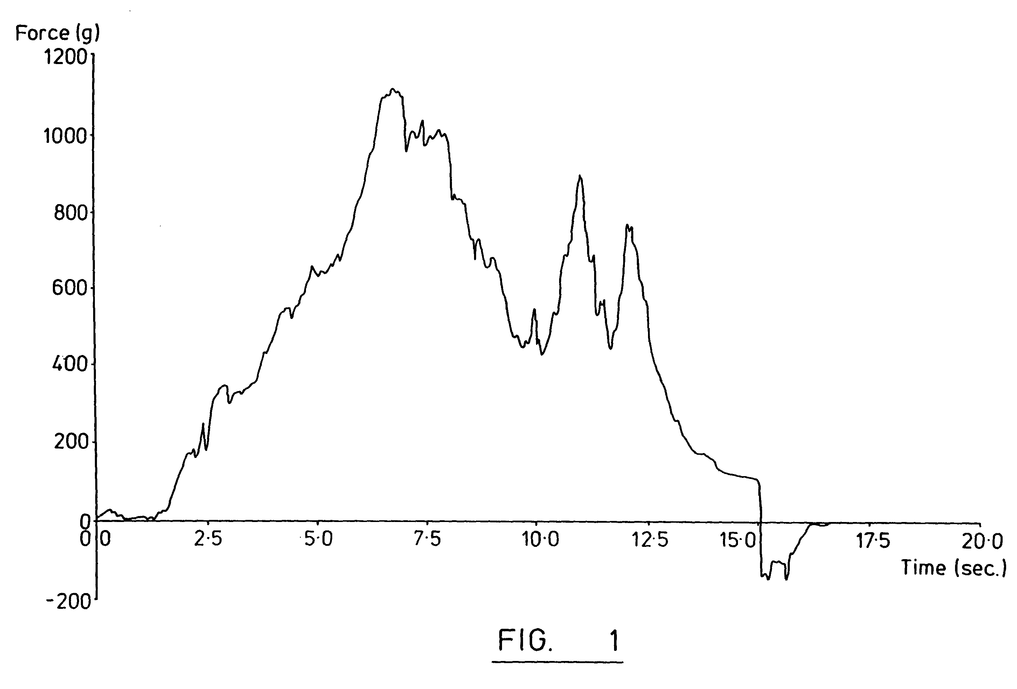

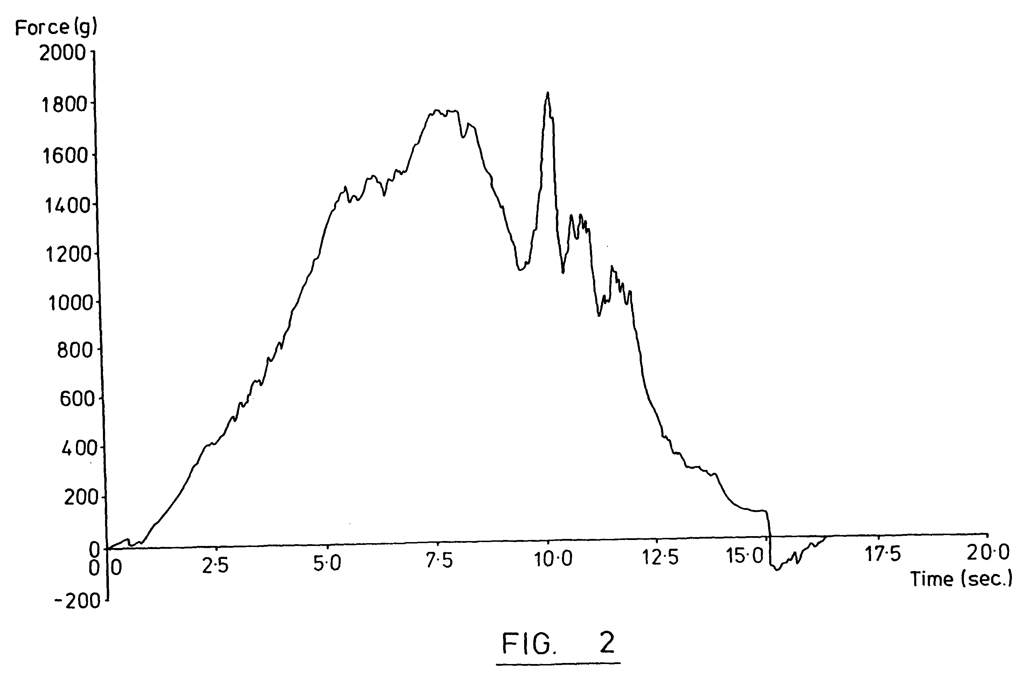

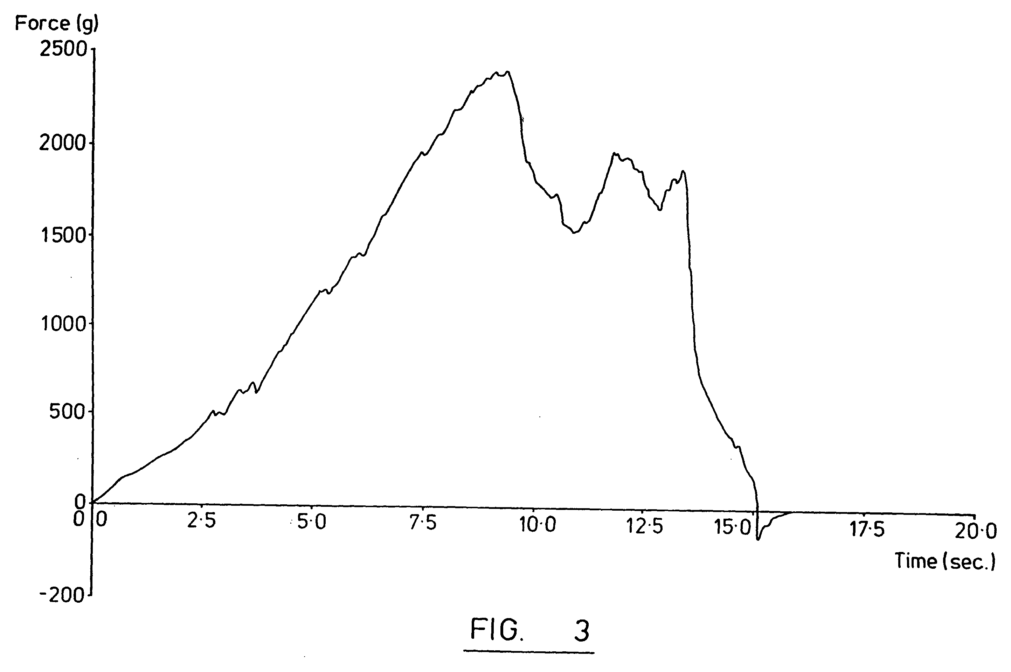

The crispness of the product is reflected in the jagged nature of the curves. The first peak denotes the point at which the blade on the texture analyser cuts through the coating and other peaks denote the point at which the blade cuts through the coating on the base of the particle. Figure 2 follows the pattern of Figure 1 but more force is required to cut the particle. The first part of the curve shows a higher level of crispness with no deterioration after 30 days storage. Figure 3 shows a similar curve after 60 days.

Further tests were carried out using the formulation of Example 16.

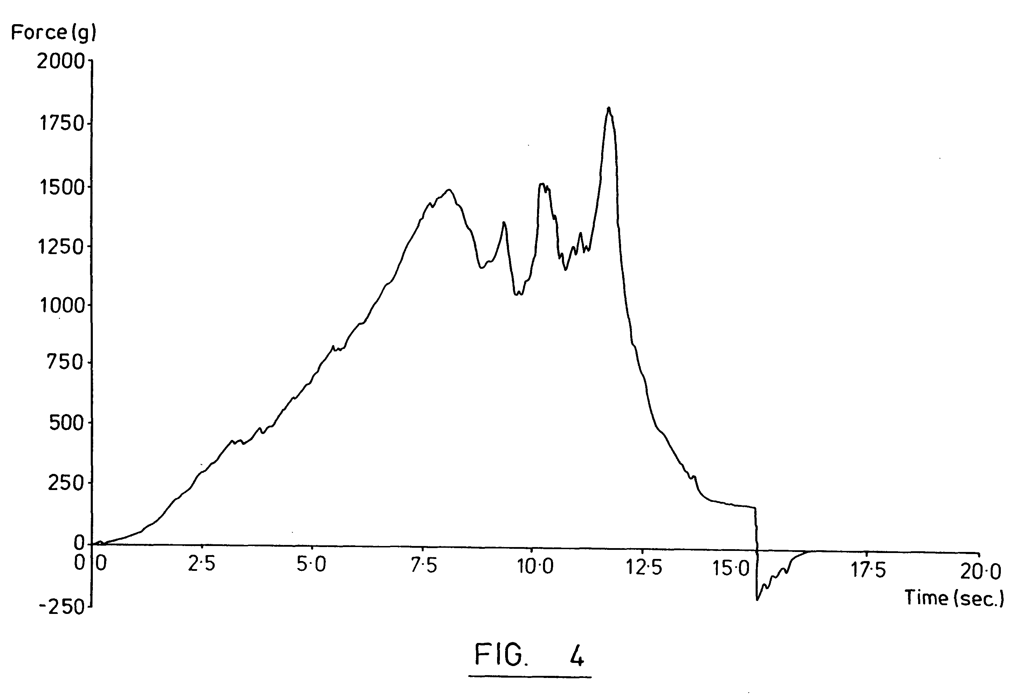

Figure 4 shows the coating after 30 days.

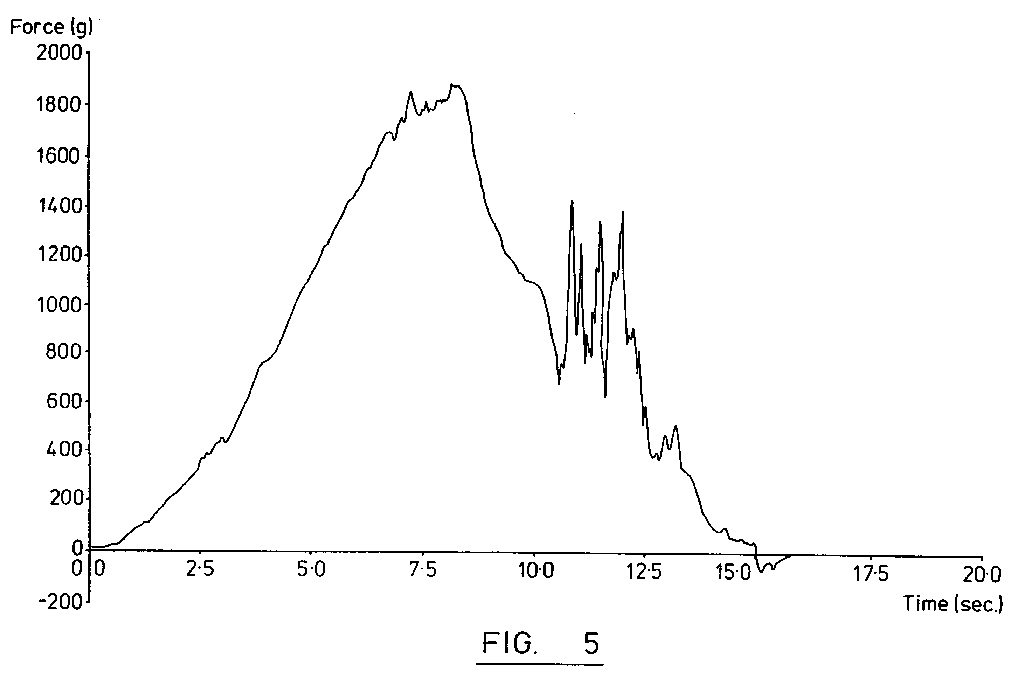

Figure 5 shows the coating after 60 days.

## Claims

1. A microwave cookable or reheatable foodstuff coating comprising an aqueous mixture including the following ingredients:
a) starch
b) flour
c) a gelling agent
d) an enzyme additive, and
e) further ingredients;
wherein the enzyme additive comprises one or more alpha-amylases optionally together with one or more further enzymes, buffers and stabilisers and wherein the composition excludes lipoxygenases.

2. A coating as claimed in claim 1, which does not contain cellulose gum.

3. A coating as claimed in claim 1, wherein the further ingredients include dried egg and an emulsifier.

4. A coating as claimed in any preceding claim, wherein the enzyme additive includes one or more proteases.

5. A coating as claimed in any preceding claim wherein the starch is high amylose starch.

6. A coating as claimed in claim 5, wherein the starch has an amylose content of 50 to 70%.

7. A coating as claimed in claim 6, wherein the starch has an amylose content of 50 to 60%.

8. A coating as claimed in any of claims 5 to 7, wherein the starch is pea starch.

9. A coating as claimed in claim 8, wherein the starch is wrinkled pea starch.

10. A coating as claimed in any preceding claim wherein the flour is low gluten or gluten-free flour.

11. A coating as claimed in claim 10, wherein the flour is soya flour.

12. A coating as claimed in any preceding claim wherein the gelling agent is a gum selected from: agar, carrageenan, arabic, guar, locus and xanthan.

13. A coating as claimed in claim 12, wherein the gelling agent is guar gum.

14. A coating as claimed in claim 12 or 13, wherein the guar gum is present in an amount of 0.01 to 5.0%.

15. A composition as claimed in claim 14, wherein the guar gum is present in an amount of 0.2 to 2.0%.

16. A process for forming a microwave cookable or reheatable coated foodstuff comprising the steps of:
providing a blended mixture of ingredients in accordance with any preceding claim with water;
incubating the mixture at an elevated temperature and pH range 6 to 10;
mixing under high shear to form an emulsion; and
applying the emulsion to a food substrate to form a coated product.

17. A process as claimed in claim 16, wherein the steps of incubation and mixing under high shear are carried out simultaneously.

## Patentansprüche

1. In der Mikrowelle kochbare oder wieder erwärmbare Nahrungsmittelbeschichtung, die ein wässriges Gemisch umfasst, das die folgenden Inhaltsstoffe einschließt:
a) Stärke
b) Mehl
c) Geliermittel
d) ein Enzym-Additiv und
e) weitere Inhaltsstoffe;
wobei das Enzym-Additiv eine oder mehrere α - Amylasen wahlweise mit einem oder mehreren weiteren Enzymen, Puffern und Stabilisatoren umfasst, und wobei die Zusammensetzung Lipooxygenasen ausschließt.

2. Beschichtung nach Anspruch 1, die kein Zellulosegummi enthält.

3. Beschichtung nach Anspruch 1, wobei die weiteren Inhaltsstoffe Trockenei und einen Emulgator einschließen.

4. Beschichtung nach einem der vorhergehenden Ansprüche, wobei das Enzym-Additiv eine oder mehrere Proteasen einschließt.

5. Beschichtung nach einem der vorhergehenden Ansprüche, wobei die Stärke eine Stärke mit hohem Amylose-Gehalt ist.

6. Beschichtung nach Anspruch 5, bei der die Stärke einen Amylosegehalt von 50 bis 70 % aufweist.

7. Beschichtung nach Anspruch 6, bei der die Stärke einen Amylose-Gehalt von 50 bis 60 % aufweist.

8. Beschichtung nach einem der Ansprüche 5 bis 7, wobei die Stärke Erbsen-stärke ist.

9. Beschichtung nach Anspruch 8, wobei die Stärke Markerbsenstärke ist.

10. Beschichtung nach einem der vorhergehenden Ansprüche, bei der das Mehl ein Mehl mit geringem Glutengehalt oder glutenfreies Mehl ist.

11. Beschichtung nach Anspruch 10, bei der das Mehl Sojamehl ist.

12. Beschichtung nach einem der vorhergehenden Ansprüche, bei der das Geliermittel ein Gummi ist, der aus folgendem ausgewählt ist: Agar, Karragheen, Gummiarabicum, Guar, Johannisbrot und Xanthan.

13. Beschichtung nach Anspruch 12, bei der das Geliermittel ein Guargummi ist.

14. Beschichtung nach Anspruch 12 oder 13, bei der der Guargummi in einer Menge von 0,01 bis 5,0 % vorliegt.

15. Zusammensetzung nach Anspruch 14, bei der der Guargummi in einer Menge von 0,2 bis 2,0 % vorliegt.

16. Verfahren zur Bildung eines in der Mikrowelle kochbaren und wieder erwärmbaren beschichteten Nahrungsmittels, das die folgenden Schritte umfasst:
Bereitstellen eines vermengten Gemisches von Inhaltsstoffen gemäß einem der vorhergehenden Ansprüche mit Wasser;
Inkubieren des Gemisches bei einer erhöhten Temperatur und einem pH-Bereich von 6 bis 10;
Mischen unter hoher Scherung zur Bildung einer Emulsion; und
Aufbringen der Emulsion auf ein Nahrungsmittelsubstrat zur Bildung eines beschichteten Produktes.

17. Verfahren nach Anspruch 16, bei dem die Schritte der Inkubation und des Mischens unter hoher Scherung gleichzeitig durchgeführt werden.

## Revendications

1. Enrobage alimentaire pouvant être cuit ou réchauffé au micro-ondes comprenant un mélange aqueux comprenant les ingrédients suivants :
a) de l'amidon
b) de la farine
c) un agent gélifiant
d) un additif enzymatique, et
e) d'autres ingrédients ;
dans lequel l'additif enzymatique comprend une ou plusieurs alpha-amylases facultativement conjuguées à une ou plusieurs autres enzymes, des tampons et des stabilisateurs, et dans lequel la composition ne comprend pas de lipoxygénases.

2. Enrobage selon la revendication 1, lequel ne contient pas de gomme cellulosique.

3. Enrobage selon la revendication 1, dans lequel les autres ingrédients comprennent de l'oeuf en poudre et un émulsifiant.

4. Enrobage selon l'une quelconque des revendications précédentes, dans lequel l'additif enzymatique comprend une ou plusieurs protéases.

5. Enrobage selon l'une quelconque des revendications précédentes, dans lequel l'amidon est un amidon à teneur élevée en amylose.

6. Enrobage selon la revendication 5, dans lequel l'amidon a une teneur en amylose de 50 à 70%.

7. Enrobage selon la revendication 6, dans lequel l'amidon a une teneur en amylose de 50 à 60%.

8. Enrobage selon l'une quelconque des revendications 5 à 7, dans lequel l'amidon est de l'amidon de pois.

9. Enrobage selon la revendication 8, dans lequel l'amidon est de l'amidon de pois ridé.

10. Enrobage selon l'une quelconque des revendications précédentes, dans lequel la farine est de la farine à faible teneur en gluten ou exempte de gluten.

11. Enrobage selon la revendication 10, dans lequel la farine est de la farine de soja.

12. Enrobage selon l'une quelconque des revendications précédentes, dans lequel l'agent gélifiant est une gomme choisie parmi : la gélose, la carraghénane, la gomme arabique, la gomme guar, la gamme de caroube et la gomme de xanthane.

13. Enrobage selon la revendication 12, dans lequel l'agent gélifiant est la gomme guar.

14. Enrobage selon la revendication 12 ou 13, dans lequel la gomme guar est présente dans une quantité de 0,01 à 5,0%.

15. Composition selon la revendication 14, dans laquelle la gomme guar est présente dans une quantité de 0,2 à 2,0%.

16. Procédé pour obtenir un aliment enrobé pouvant être cuit ou réchauffé au micro-ondes comprenant les étapes consistant à :
fournir un mélange d'ingrédients selon l'une quelconque des revendications précédentes avec de l'eau ;
laisser incuber le mélange à une température élevée et une plage de pH de 6 à 10;
mélanger sous un fort cisaillement pour former une émulsion ; et
déposer l'émulsion sur un substrat alimentaire pour former un produit enrobé.

17. Procédé selon la revendication 16, dans lequel les étapes d'incubation et de mélangeage sous fort cisaillement sont effectuées simultanément.
